# EUROPEAN PATENT SPECIFICATION

(11) **EP 2 685 684 B1**
(45) Date of publication and mention of the grant of the patent: **13.09.2017**
(21) Application number: 12305849.7
(22) Date of filing: 13.07.2012
(51) Int. Cl.: H04L 12/801, H04L 12/851, H04L 12/841, H04L 12/823

(54) **Method and device for managing congestion in a communication network device**
Verfahren und Vorrichtung zur Verwaltung der Überlastung in einer Kommunikationsnetzwerkvorrichtung
Procédé et dispositif de gestion de la congestion dans un dispositif de réseau de communication

(43) Date of publication of application: 15.01.2014
(73) Proprietor: ALCATEL LUCENT, 92100 Boulogne-Billancourt (FR)
(72) Inventor: Ho, Honoré, 78141 VELIZY (FR)
(74) Representative: Berthier, Karine

(56) References cited:
- US-A1- 2003 016 625
- US-B1- 7 426 575
- JIANXIN WANG ET AL: "A Prediction-Based AQM Algorithm for DiffServ Networks", NETWORKS, 2006. ICON '06. 14TH IEEE INTERNATIONAL CONFERENCE ON, IEEE, PI, 1 September 2006 (2006-09-01), pages 1-6, XP031042775, ISBN: 978-0-7803-9746-0
- ORUGANTI S S ET AL: "A study of robust active queue management schemes for correlated traffic", COMPUTER COMMUNICATIONS, ELSEVIER SCIENCE PUBLISHERS BV, AMSTERDAM, NL, vol. 28, no. 1, 31 January 2005 (2005-01-31), pages 1-11, XP027760611, ISSN: 0140-3664 [retrieved on 2005-01-31]
- YUAN GAO ET AL: "On exploiting traffic predictability in active queue management", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 3, 23 June 2002 (2002-06-23), pages 1630-1639, XP010593731, DOI: 10.1109/INFCOM.2002.1019416 ISBN: 978-0-7803-7476-8
- CHEBROLU K ET AL: "Selective frame discard for interactive video", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, vol. 7, 20 June 2004 (2004-06-20), pages 4097-4102, XP010711930, DOI: 10.1109/ICC.2004.1313320 ISBN: 978-0-7803-8533-7

## Description

### TECHNICAL FIELD

The technical domain is the domain of communication networks, such as frame or packet switched networks.

### BACKGROUND

JIANXIN WANG ET AL, "A Prediction-Based AQM Algorithm for DiffServ Networks", NETWORKS, 2006. ICON'06. 14TH IEEE INTERNATIONAL CONFERENCE ON, IEEE, PI, (20060901), ISBN 978-0-7803-9746-0, PAGE 1 - 6 discloses a prediction based AQM algorithm for Diffserv Networks in which upon receiving a packet an arrival rate in a last interval is calculated and Minimum Mean Square Error predictor predicts an arrival rate in a next interval.

US 2003/0016625 discloses a system and method for traffic congestion control at the media access controller level using pre-classifying traffic during periods of oversubscription in which the media access controller receives an inbound packet and pre-classifies the packet for determining its priority. The packet is admitted or not based on the congestion information.

Further management schemes are disclosed in ORUGANTI S S ET AL, "A study of robust active queue management schemes for correlated traffic", COMPUTER COMMUNICATIONS, ELSEVIER SCIENCE PUBLISHERS BV, AMSTERDAM, NL, vol. 28, no.1, IssN 0140-3664, (20050131), PAGE 1-11, YUAN GAO ET AL, "On exploiting traffic predictability in active queue management", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, (20020623), vol. 3, doi:10.1109/INFCOM.2002.1019416, ISBN 978-0-7803-7476-8, PAGE 1630-1639, and CHEBROLU K ET AL, "Selective frame discard for interactive video", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, (20040620), vol. 7, dot: 10.1109/ICC.2004.1313320, ISBN 978-0-7803-8533-7, PAGE 4097 - 4102.

In such a communication network, packets (or frames) are routed through devices such as (output stages of) switches or routers. Depending on the demand, such a device may encounter congestion when more packets that can be processed arrive into said device.

Let us consider such a device comprising at least one ingress queues and at least one egress queue. Said at least one ingress queue can comprise n ingress queues. Said n ingress queues can e.g. be dedicated to different traffic priorities.

Congestion occurs when the number/rate of packets arriving into said device is higher than the processing capacity. When the egress queue is almost full, a congestion state is reached. If said congestion state continues, it may end into a full state where the egress queue is totally full. In such state, the device is no longer able to process next incoming packets, and all following incoming packets are de facto discarded, without any selection or prioritization, thus disregarding their relative importance.

To avoid such a brutal outcome, it is known to discard packets before a full state is reach, thus as soon as a congestion state occurs or can be detected. Said packets are advantageously discarded before being processed by the device. Such a method is called early discard, ED. Every ED scheme advantageously reduces the speed of a transition
between a congestion state and a full state at the cost of a given amount of discarded, thus lost, packets. Such a reduction allows the device to carry on processing later on and thus offers an opportunity to avoid said full state and to revert back to a nominal, uncongested, state. This is especially the case when the congestion state is caused by a short duration burst of incoming packets.

Said discard may be random. In such a scheme, called random early discard, RED, a packet to be discard is randomly selected. Such a RED scheme does not provide any selection and disregard the relative importance of discarded packets.

Said discard may also be weighted according to traffic priority. In such a scheme, called weighted RED, WRED, when a congestion state is reached, a packet selected from the least traffic priority is discarded first. Then if more packets are to be discarded and there is no remaining least traffic priority packet, packets to be discarded are selected from the second least traffic priority, and so on. Such a WRED scheme intends to process higher traffic priority packets to the detriment of lesser traffic priority packets.

A WRED scheme thus improves over a RED scheme and is adapted to manage different traffic priorities, such as quality of services, QoS. However in a congested device, often in or near congestion state, a WRED scheme may lead to a systematic discarding of least traffic priority packets, which may thus never get any opportunity to be transmitted.

An ED scheme offering better/smarter ways of selecting which packets are discarded is thus needed.

### SUMMARY

To this purpose is disclosed a predictive ED, PED, based on a probabilistic prediction of which traffic priority packet will next income and at which time.

An embodiment is directed to a method for managing congestion in a communication network device according to claim 1.

According to another feature, a packet of a traffic priority is estimated to arrive when said probability of arrival associated to said traffic priority is higher than a threshold.

According to another feature, said congestion indicator is built upon a detection of the egress queue being almost full.

According to another feature, a separate threshold is associated to each traffic priority.

According to another feature, the computing step comprises: monitoring arrival time of incoming packets according to their traffic priority so as to determine a distribution function for each traffic priority estimating a probability of arrival versus time for future packets.

According to another feature, each distribution is modelled, assuming a probabilistic law, by an average and a standard deviation.

According to another feature, the probability of arrival is considered to be higher than the threshold, during time windows disposed around central instants periodically defined with a period equal to the average and with respect to an origin instant determined by a raising of the congestion indicator.

According to another feature, each time window is open from a beginning instant until an ending instant, said beginning instant being defined by a first duration multiple of the standard deviation before said central instant, said ending instant being defined by a second duration multiple of the standard deviation after said central instant.

Another embodiment is directed to a congestion device according to claim 8.

### BRIEF DESCRIPTION OF THE DRAWINGS

Others features, details and advantages will become more apparent from the detailed illustrating description given hereafter with respect to the drawings on which:
- figure 1 illustrates a device environment where an embodiment can take place,
- figure 2 shows a chronogram of estimated times of arrivals of packets according to their priority,
- figure 3 shows a flow chart of an embodiment of the method.

### DETAILED DESCRIPTION

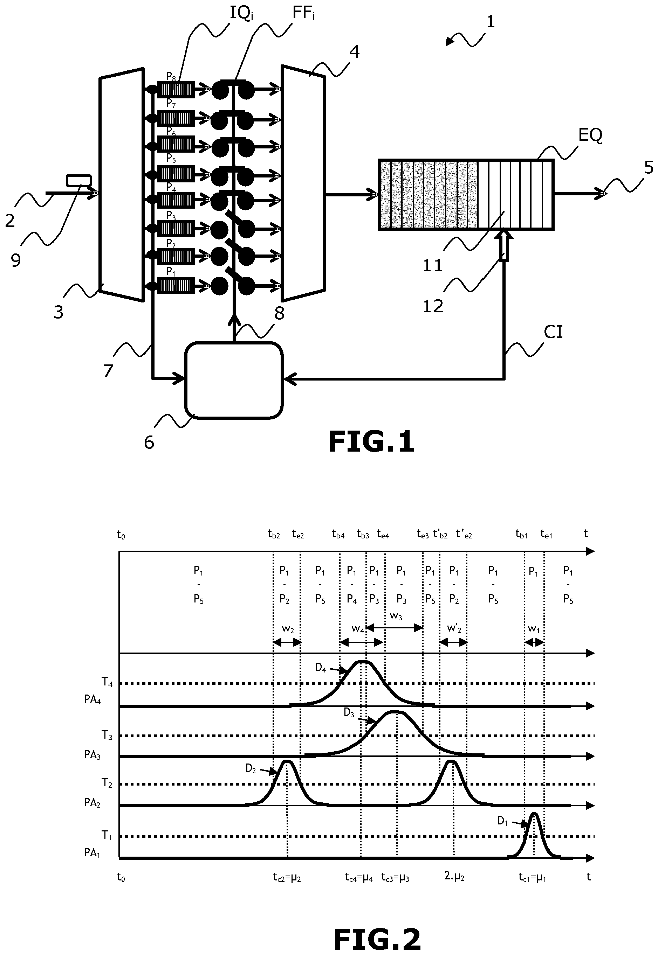

According to figure 1, is figured a device 1 indicative of a device able to implement an embodiment of the method. Said device 1 is able to process incoming packets 9. The word packet is used here indifferently for packet, frame or any kind of data set. Said incoming packets 9 enter into the device 1 through its input 2 and go out through its output 5.

When an incoming packet 9 arrives at the input 2, it first encounters a demultiplexer 3. Said demultiplexer 3 is in charge of sorting incoming packets 9 according to their traffic priority Pᵢ, where i is an integer index, i=1..n. Any given number n of traffic priorities Pᵢ can be used. Here in figure 1 the device 1 comprises n = 8 traffic priorities P₁-P₈. The sorting applied by said demultiplexer 3 maybe based on any kind of indicator. It can be e.g. based on the class of service of the packet, but not necessarily.

It is supposed for the rest of the present that the lower the value of the index i is, the higher the traffic priority Pᵢ is. Here P₁ is the highest priority and P₈ is the lowest one. If it is not initially the case, a step of the method may comprises ordering the traffic priorities Pᵢ, i=1..n, from the highest priority P₁ to the lowest priority Pₙ.

In order to accommodate for speed variations of incoming packets 9, said incoming packets 9, once sorted are advantageously stored in ingress queues IQᵢ, e.g. one ingress queue IQᵢ per each traffic priority Pᵢ, with the same corresponding index i. When outputting from said ingress queues IQᵢ, packets cross a functional filter FFᵢ and are gathered by a multiplexer 4. Said multiplexer 4 receives all packets from all the ingress queues IQᵢ and transmits them to an egress queue EQ, linked to the output 5.

A functional filter FFᵢ is connected between an ingress queue IQᵢ and said multiplexer 4, one such filter FFᵢ being dedicated to one ingress queue IQᵢ, with the same corresponding index i. Such a functional filter FFᵢ can be individually controlled between two states: a closed state where an incoming packet 9 is transmitted through the filter FFᵢ, from the ingress queue IQᵢ to the multiplexer 4, and an open state where an incoming packet 9 is discarded.

The egress queue EQ receives packets from the multiplexer 4 and delivers them to the output 5. Said egress queue EQ comprises a capacity of several storage boxes, each storage box being able to store at least one packet, in order to damp speed variations of packets.

Depending on the number and frequencies of incoming packets 9 arriving at the input 2 of the device 1, it may happen that said egress queue EQ becomes full. The aim of the present disclosure is to avoid such a full state by discarding packets before (Early Discard, ED) they reach the egress queue EQ. Said discard is advantageously applied before the occurrence of such a full state, as soon as a congestion can be detected. A congestion state can thus be defined by an almost full state.

To manage said discard, the device 1 comprises a control unit 6. Said control unit 6, through commands 8, is able to individually command selectively each functional filter FFᵢ, so as to discard a incoming packet 9 of corresponding traffic priority Pᵢ. To determine when and which packet to discard, said control unit 6 receives at least two information.

A first information 7, coming from the input side of the device 1, that is, from the demultiplexer 3 or from the ingress queues IQᵢ, comprises the times of arrival of incoming packets 9 according to their traffic priority Pᵢ.

A second information CI, coming from the egress queue EQ is a congestion indicator, CI. Said congestion indicator CI is provided by said egress queue EQ when said egress queue EQ is about to be full.

One possible embodiment of such a congestion indicator CI can be, as illustrated in figure 1, to check a given storage box 11 of said egress queue EQ. Let us consider the egress queue EQ fills itself from left to right. Its state of filing is thus indicated by a grey pattern.

If the rightmost storage box is filled, then the egress queue EQ is full and over congested. If this happens it is too late. The aim of the present is to avoid such full state before it occurs.

Accordingly, a particular storage box 11 is chosen left from the rightmost storage box, and observed as indicated by a broad arrow 12. When said arrowed storage box 11 is filled, the egress queue EQ is congested. The egress queue EQ is not full but is about to be full or is almost full. The egress queue EQ is then in a congestion state. The congestion indicator CI may then be raised to an up or active state when said arrowed storage box 11 contains at least one packet. Accordingly, when said arrowed storage box 11 is emptied again, said congestion indicator CI is reverted back to a low or inactive state.

The filling level of the egress queue EQ corresponding to the congestion state, that is, when said egress queue EQ is considered to be almost full, can be configured by changing the arrowed storage box 11. E.g. a congestion indicator CI can correspond to e.g. 70%, 75%, 80%, etc. filling of the egress queue EQ. Else it may also be configured by a number of remaining storage boxes between said arrowed storage box 11 and the last storage box of the egress queue EQ. Else it may also be configured by a time interval in which said egress queue may be estimated to reach a full state. Said estimated time interval may be converted into a number of remaining storage boxes between said arrowed storage box 11 and the last storage box, based on an estimation of the number of incoming packets.

Based on these two information 7, CI, said command unit 6 may determine an early discard scheme, selecting which packet to discard or not, and apply said scheme through the corresponding commands 8 of functional filters FFᵢ.

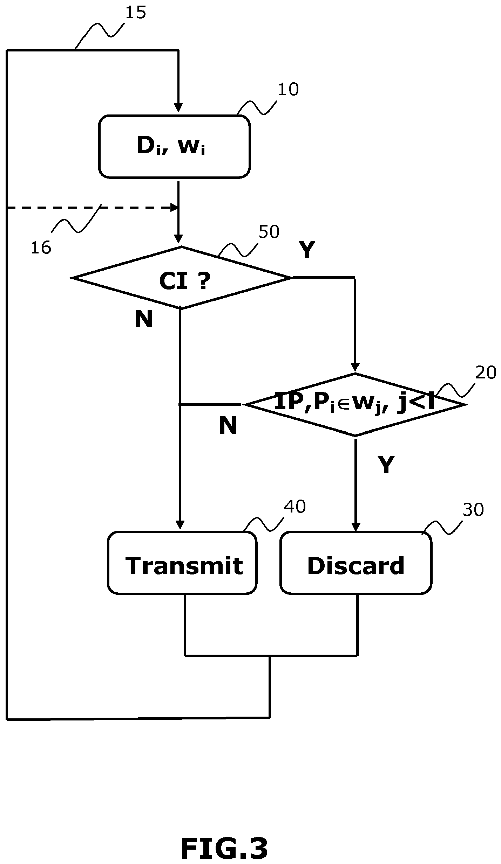

According to an embodiment, a method for managing congestion in a communication network device 1 comprising several ingress queues IQᵢ, each ingress queue IQᵢ being dedicated to a given traffic priority Pᵢ, and at least one egress queue EQ, may comprises the following steps, as depicted in figure 3.

A first step, consists in computing 10 a distribution function Dᵢ for each traffic priority Pᵢ, i=1..n, estimating a probability of arrival PAᵢ versus time t.

If the egress queue EQ is not in a congested state, as indicated by no congestion indicator CI, tested in first test 50, an incoming packet 9 is transmitted 40, whatever its traffic priority Pᵢ.

If the egress queue EQ is in a congested state, as indicated by a congestion indicator CI, tested in first test 50, based on said distribution function Dᵢ, a second test 20 may checks, when an incoming packet 9 of a given traffic priority Pᵢ effectively arrives at the input 2 of the device 1, if an incoming packet of a traffic priority Pⱼ strictly higher than said given priority Pᵢ (Pⱼ>Pᵢ, that is, j<i) can be probabilistically estimated to arrive generally at the same time.

If this is the case, and, said incoming packet 9 of traffic priority Pᵢ is discarded 30. This allows the device 1 to be available and ready to process said expected packet of the higher traffic priority Pⱼ when it arrives.

If this is not the case, because either no higher traffic priority incoming packet is expected or the egress queue EQ is not in a congested state, said incoming packet 9 of traffic priority Pᵢ can be normally transmitted 40 to the egress queue EQ.

An embodiment of said method is better illustrated with reference to figure 2. Here a five traffic priorities case P₁-P₅ is depicted. The diagram shows a temporal diagram, with crescent time t from left to right. Four synchronised time lines are presented, one for each of the four highest traffic priorities P₁-P₄, from the bottom to the top. On top of these lines is figured a processing rule indicating which traffic priorities Pᵢ can be processed in the corresponding time interval, even in case of congestion.

The diagram start on the left at instant to, corresponding to the instant where the congestion indicator CI is raised.

It can be noticed that all or part of the computation may either be processed continuously and used only when a congestion indicator CI is raised or be processed and used only after said congestion indicator CI is raised.

For each priority traffic Pᵢ, but the lowest traffic priority, here P₅, a distribution function Dᵢ estimating a probability of arrival PAᵢ versus time t is computed for the future.

For instance, the bottom line shows a distribution D₁ versus time t indicative of the probability of arrival PA₁ of an incoming packet 9 pertaining to the first (highest) traffic priority P₁. Similarly, the next upper line shows a distribution D₂ versus time t indicative of the probability of arrival PA₂ of an incoming packet pertaining to the second traffic priority P₂. Similarly, the next upper line shows a distribution D₃ versus time t indicative of the probability of arrival PA₃ of an incoming packet pertaining to the third traffic priority P₃. Similarly, the next upper line shows a distribution D₄ versus time t indicative of the probability of arrival PA₄ of an incoming packet pertaining to the fourth traffic priority P₄.

According to an embodiment, each of said distributions Dᵢ is used to determine at least one time window wᵢ during which a packet of said corresponding traffic priority Pᵢ is considered/estimated to be enough probable to be expected. In such a case, any incoming packet 9 of a strictly lesser traffic priority Pⱼ, i < j, arriving during said time window wⱼ is discarded, in order to free the device 1 to privileged said estimated packet so as to be able to process it when it arrives.

Such a time window wᵢ is typically determined by comparing the distribution function Dᵢ with a corresponding threshold Tᵢ. A window wᵢ begins at a starting time t_{bi} where distribution Dᵢ becomes greater than the threshold Tᵢ and ends at an ending time tₑᵢ where distribution Dᵢ becomes lower than the threshold Tᵢ.

E.g. a window w₂ is determined by comparing distribution D₂ with the threshold T₂. Window w₂ begins at a starting time t_{b2} where distribution D₂ becomes greater than the threshold T₂ and ends at an ending time tₑ₂ where distribution D₂ becomes lower than the threshold T₂.

Said threshold Tᵢ determines above which value of a distribution Dᵢ a packet is to be considered probable and so determines the corresponding window wᵢ. Said threshold Tᵢ may be a global one used for all distributions Dᵢ. Alternately, a separate threshold Tᵢ may be associated to each distribution Dᵢ and thus to each traffic priority Pᵢ. This allows to configure the method by trimming the widths of windows wᵢ separately for each traffic priority Pᵢ.

During a time window wᵢ, a packet of traffic priority Pᵢ can be expected. Consequently, during said time window wᵢ, any incoming packet 9 of a traffic priority Pⱼ greater than or equal to said traffic priority Pᵢ is processed normally and transmitted to the egress queue EQ. On the contrary, during said time window wᵢ, any incoming packet 9 of a traffic priority Pⱼ strictly lesser than said traffic priority Pᵢ is discarded, as long as a congestion indicator CI is present.

On the first line of the figure 2 diagram is mentioned the traffic priorities that can be transmitted (not discarded). From left to right, from to to t_{b2}, since no packet is probabilistically estimated to arrive, any incoming packet 9 can be processed, whatever its traffic priority Pᵢ-P₅. From t_{b2} to tₑ₂, a packet of traffic priority P₂ is expected. This is expressed by an open window w₂. During said interval only an incoming packet 9 of a priority Pᵢ higher or equal to P₂ will be transmitted, that is, an incoming packet from traffic priority P₁-P₂. An incoming packet 9 of a priority Pᵢ strictly lesser than P₂, that is, from traffic priority P₃-P₅ will be discarded, if said congestion indicator CI is present. From tₑ₂ to t_{b4}, no packet is probabilistically estimated to arrive, any incoming packet 9 can be transmitted, whatever its traffic priority P₁-P₅. From t_{b4} to t_{b3}, a packet of traffic priority P₄ is expected. This is expressed by an open window w₄. During said interval only an incoming packet 9 of a priority Pᵢ higher or equal to P₄ will be transmitted, that is, an incoming packet from traffic priority P₁-P₄. An incoming packet 9 of a priority Pᵢ strictly lesser than P₄, that is, from traffic priority P₅ will be discarded, if said congestion indicator CI is present.

From t_{b3} to tₑ₄, both a packet of traffic priority P₄ and a packet of traffic priority P₃ are expected. This is expressed by both an open window w₃ and an open window w₄. During said interval only an incoming packet 9 of a priority Pᵢ higher or equal to the highest traffic priority among P₃ and P₄ will be transmitted, that is, an incoming packet from traffic priority P₁-P₃. An incoming packet 9 of a priority Pᵢ strictly lesser than P₃, that is, from traffic priority P₄-P₅ (P₄ here included) will be discarded, if said congestion indicator CI is present.

From te₄ to tₑ₃, a packet of traffic priority P₃ is expected, as expressed by an open window w₃. During said interval only an incoming packet 9 of a priority P₁-P₃ will be transmitted. An incoming packet 9 of a priority P₄-P₅ will be discarded, if said congestion indicator CI is present. From tₑ₃ to t'_{b2}, no packet is probabilistically estimated to arrive and any incoming packet 9 will be transmitted. From t'_{b2} to t'ₑ₂, a packet of traffic priority P₂ is expected, as expressed by an (second) open window w'₂. During said interval only an incoming packet 9 of a priority P₁-P₂ will be transmitted. An incoming packet 9 of a priority P₃-P₅ will be discarded, if said congestion indicator CI is present. From t'ₑ₂ to t_{b1}, no packet is probabilistically estimated to arrive and any incoming packet 9 will be transmitted. From t_{b1} to tₑ₁, a packet of traffic priority P₁ is expected, as expressed by an open window w₁. During said interval only an incoming packet 9 of a priority P₁ will be transmitted. An incoming packet 9 of a priority P₂-P₅ will be discarded, if said congestion indicator CI is present.

As a digest, an incoming packet 9 of a given priority Pⱼ, j = 1..n, is discarded 30 when it arrives during a period where a packet of a higher priority Pᵢ, i < j, is probabilistically expected, indicated by a probability of arrival PAᵢ greater that an associated threshold Tᵢ, or figured by said incoming packet 9 of a given priority Pⱼ arriving during an open window wᵢ, i < j, and the congestion indicator CI is present. Otherwise, an incoming packet 9 is transmitted 40 to the egress queue EQ.

As described before, the congestion indicator CI is typically indicative of a congestion state, where the egress queue EQ is almost full, but before it is completely full and cannot process any packet. According to an embodiment, such a congestion indicator CI may be built by observing 12 one of the last storage boxes 11 of the egress queue EQ. The congestion indicator CI is raised to an active state when said storage box 11 is filled. The congestion indicator CI is reverted back to a low/inactive state when said storage box 11 is emptied.

During the computing step 10, the method determines for each traffic priority Pᵢ a probability of arrival PAᵢ. It can be e.g. in the form of a distribution Dᵢ function indicative of the probability of arrival of a future packet versus time t. It can also be in a more operative form, as a set of temporal windows wᵢ for each traffic priorities Pᵢ.

To do so, said computing step 10 typically exploits the arrival time of incoming packets 9 information 7. To do so the incoming packets 9 are continuously monitored. From the observation of these incoming packets 9, and especially their arrival times, according to their traffic priority Pᵢ, a model able to estimate the future arrival times of packet is determined. Said model may e.g. be in the form of a distribution Dᵢ for each traffic priority Pᵢ.

It must be noted that the monitoring of incoming packets 9 is preferably apply continuously, so as to observe all incoming packets 9, and permanently, that is even when the method is not actively discarding packets to react to a congestion state.

However the refreshing of the estimation model/distribution can be apply at a lesser rate. This is figured on the diagram of figure 3. The step 10 with a refreshing of said estimation model may be applied each time a packet is processed, being either discarded 30 or transmitted 40, as figured by branching 15. Alternately a same estimation model may be kept unchanged for the processing of several packets, as figured by branching 16, e.g. for a whole congestion campaign, until a congestion state is overcame and the congestion indicator CI reverts back to a low state.

A possible way of determining an estimation model Dᵢ from the observed arrival times information 7 of incoming packets 9 is to assume a given probabilistic law and to characterize the observed arrival time data 7 by some probabilistic parameters. Any distribution law may be used to best match to the traffic profile.

For instance, as an illustration of a possible embodiment, a normal law (Gaussian) can be assumed. For a given traffic priority Pᵢ, all arrival times of (past) packets of said priority Pᵢ are analysed, using any known method, to determines an average µᵢ and a standard deviation σᵢ. Based on these parameters a distribution function Dᵢ can be built that matches the observed arrival times of (past) incoming packets 9. If said assumed probabilistic law is adapted, said distribution function Dᵢ can be used as an estimation model to estimate the arrival time of future packets.

With a normal law, the form of the distribution Dᵢ is, as illustrated in figure 2, a periodical function with a period equal to the average µᵢ. Said function Dᵢ starts from to, where the congestion indicator CI raised, and exhibits periodical peaks centred around central times t_{ci} multiples of the period/average µᵢ, that is, t_{ci} = p . µᵢ, where p is an integer. A first peak appears at central time µᵢ, a second peak appears at central time 2.µᵢ, and so on. Each peak has a form determined by the probabilistic law chosen. Here with a normal law, each peak shows a normal/Gaussian function form, centred around said central time t_{ci} and with a width defined by said standard deviation σᵢ.

Given a threshold Tᵢ, such a distribution Dᵢ provides periodical windows wᵢ. As is known in normal law theory, the highness of said threshold Tᵢ can be related to a number of standard deviations and thus to a density of probability. A given threshold Tᵢ or a number of standard deviations (1.σᵢ, 1,5.σᵢ, 2.σᵢ, k. σᵢ, etc.) thus determines width of windows wᵢ.

It is thus possible to configure the width of the windows wᵢ, of each traffic priority Pᵢ. Such a configuration may be flat: same width or same number of standard deviations for all traffic priorities Pᵢ.

Alternately additional factors can be used. A typical factor can be based on traffic priority Pᵢ. It is then possible to apply a profile where the width of a window wᵢ becomes greater as the traffic priority increases. In such a case, let us consider that a 2.σᵢ nominal window width is e.g. chosen. The width of the window w₁ of the highest traffic priority P₁ can be taken equal to 2n.σ₁, while the width of the window w₂ of the traffic priority P₂ can be taken equal to 2(n-1).σ₂, while the width of the window w₃ of the traffic priority P₃ can be taken equal to 2(n-2).σ₂, and so on until the width of the window wₙ of the traffic priority Pₙ taken equal to 2.σₙ. Here an illustrative linear increasing profile has been described. Any other type of profile can either be used, such as e.g. decreasing or non linear, etc.

Another additional factor is an average packet size. The width of a window wᵢ can be adapted as a function, e.g. crescent, of an average size of the packets of the traffic priority Pᵢ.

Each window wᵢ, is disposed around a central instant t_{c}. Said window wᵢ opens from a beginning instant t_{b} until an ending instant tₑ. Said beginning instant t_{b} can be defined by a first duration before said central instant t_{c}. Said first duration may e.g. be a multiple of the standard deviation σᵢ. Said beginning instant t_{b} may then be expressed as t_{b} = t_{c} - k_{b} * σᵢ, with k_{b} being a number, not necessarily integer. Said ending instant tₑ can be defined by a second duration after said central instant t_{c}. Said second duration may e.g. be a multiple of the standard deviation σᵢ. Said ending instant tₑ may then be expressed as tₑ = t_{c} + kₑ * σᵢ, with kₑ being a number, not necessarily integer, and possibly but not necessarily equal to k_{b}.

The present disclosure also concerns a device able to implement any embodiment of the method. The two main processes: estimation and discard, present different requirements. For instance the estimation process, in charge of continuously computing the probabilistic estimation model Dᵢ, e.g. in the form of averages µᵢ and standard deviations σᵢ for each traffic priority Pᵢ, is rather computation resources consuming and can be implemented into a processor. The discard process, simpler and only working when congestion state is detected, is less computation resources consuming and can be implemented into one FPGA.

## Claims

1. A method for managing congestion in a communication
network device (1) comprising several ingress queues (IQi),
each ingress queue (IQi) being dedicated to store incoming
packets according to a given traffic priority (Pi), at least
one egress queue (EQ) adapted to receive and store traffic
packets from said several ingress queues (IQi), and a control
unit (6) adapted to control either transmitting or discarding
the traffic packets stored in the ingress queues (IQi),
the method comprising
- receiving at the network device (1) an incoming packet (9) of a given traffic priority (Pi),
- storing said incoming packet (9) in an corresponding ingress queue (IQi), **characterized in that** the method comprises performing at said control unit (6) the following steps:
receiving from said ingress queues (IQi) a first information comprising the times of arrival of said incoming packets;
computing (10), based on said first information, a distribution function (Di) for each traffic priority (Pi) estimating a probability of arrival (PAi) versus time (t) for future packets of said priority, and determining, based on each distribution function (Di), at least one time window (wi) during which a future packet of corresponding traffic priority (Pi) is estimated to arrive;
- detecting (50) the reception of a congestion indicator (CI) from said egress queue (EQ) ;
- on reception of both said congestion indicator (CI) and of
said incoming packet (9), discarding (30)
the stored incoming packet (9) if the time of arrival of the received incoming packet falls within a time window (wj) during which a packet of a traffic priority (Pj) higher than said given traffic priority (Pi) is estimated to arrive, else, transmitting (40) the stored incoming packet (9) to the egress queue (EQ) .

2. The method of claim 1, wherein a packet of a traffic priority (Pj) is estimated to arrive when said probability of arrival (PAj) associated to said traffic priority (Pj) is higher than a threshold (Tj).

3. The method of any of claims 1 to 2, wherein a separate threshold (Ti) is associated to each traffic priority (Pi).

4. The method of any one of claims 1 to 3, wherein the computing (10) step comprises: monitoring arrival time of incoming packets (9) according to their traffic priority (Pi) so as to determine a distribution function (Di) for each traffic priority (Pi) estimating a probability of arrival (PAi) versus time (t) for future packets.

5. The method of any one of claims 1 to 4, wherein each distribution (Di) is modelled, assuming a probabilistic law, by an average (µi) and a standard deviation (σi).

6. The method of claims 2 and 5, wherein the probability of arrival (PAi) is considered to be higher than the threshold (Ti), during time windows (wi) disposed around central instants (tci) periodically defined with a period equal to the average (µi) and with respect to an origin instant (t0) determined by a raising of the congestion indicator (CI).

7. The method of claim 6, wherein each time window (wi) is open from a beginning instant (tbi) until an ending instant (tei), said beginning instant (tbi) being defined by a first duration multiple of the standard deviation (σi) before said central instant (tci), said ending instant (tei) being defined by a second duration multiple of the standard deviation (σi)
after said central instant (tci) .

8. A congestion managing device comprising several ingress
queues (IQi), each ingress queue (IQi) being dedicated to
store incoming packets according to a given traffic priority
(Pi), at least one egress queue (EQ) adapted to receive and
store traffic packets from said several ingress queues (IQi),
and a control unit (6) adapted to control either transmitting
or discarding the traffic packets stored in the ingress
queues (IQi),
wherein an incoming packet (9) of a given traffic priority (Pi) is received, and
wherein said incoming packet (9) is stored in a corresponding ingress queue (IQi); **characterized in that** said control unit (6)
comprises:
a receiver for receiving from said ingress queues (IQi) a first information comprising the times of arrival of said incoming packets;
a computer for computing (10), based on said first information, a distribution function (Di) for each traffic priority (Pi) estimating a probability of arrival (PAi) versus time (t) for future packets of said priority, and determining, based on each distribution function (Di), at least one time window (wi) during which a future packet of corresponding traffic priority (Pi) is estimated to arrive;
- a detector for detecting (50) the reception of a congestion indicator (CI) from said egress queue (EQ);
said control unit (6) further comprising:
- a discarder adapted to, on reception of both said
congestion indicator (CI) and of said incoming packet (9), discard (30) the stored incoming packet (9)
if the time of arrival of the received incoming packet falls within a time window (wj) during which a packet of a traffic priority (Pj) higher than said given traffic priority (Pi) is estimated to arrive;
- a transmitter for transmitting (40) otherwise the stored incoming packet (9) to the egress queue (EQ).

## Patentansprüche

1. Verfahren zum Verwalten einer Übertastung in einer Kommunikationsnetzwerkvorrichtung (1), umfassend mehrere Eingangswarteschlangen (IQi), wobei jede Eingangswarteschlange (IQi) dediziert ist zum Speichern von Eingangspaketen gemäß einer gegebenen Verkehrspriorität (Pi), wobei mindestens eine Ausgangswarteschlange (ED) ausgelegt ist zum Empfangen und Speichern von Verkehrspaketen von besagten mehreren Eingangswarteschlangen (lQi), und eine Steuereinheit (6), die ausgelegt ist zum Steuern entweder der Übertragung oder des Verwerfens der Verkehrspakete, die in den Eingangswarteschlangen (IQi) gespeichert sind, wobei das Verfahren umfasst
- Empfangen an der Netzwerkvorrichtung (1) eines Eingangspakets (9) mit einer gegebenen Verkehrspriorität (Pi),
- Speichern besagten Eingangspakets (9) in einer entsprechenden Eingangswarteschlange (IQi),
**dadurch gekennzeichnet, dass** das Verfahren umfasst das Durchführen an besagter Steuereinheit (6) der folgenden Schritte:
Empfangen von besagten Eingangswarteschlangen (IQi) einer ersten Information, umfassend die Ankunftszeiten der besagten Eingangspakete; Berechnen (10), auf Grundlage besagter ersten Information, einer Verteilungsfunktion (Di) für jede Verkehrspriorität (Pi) durch Abschätzen einer Ankunftswahrscheinlichkeit (PAi) gegen die Zeit (t) für künftig Pakete besagter Priorität, und Bestimmen, auf Grundlage jeder Verteilungsfunktion (Di), mindestens eines Zeitfensters (wi), während dessen die Ankunft eines künftigen Pakets entsprechender Verkehrspriorität (Pi) geschätzt wird;
- Erkennen (50) des Empfangs eines Überlastungsindikators (CI) von besagter Ausgangswarteschlange (EQ);
- beim Empfangen sowohl von besagtem Überlastungsindikator (CI) als auch von besagtem Eingangspaket (9), Verwerfen (30) des gespeicherten Eingangspakets (9), wenn die Ankunftszeit des empfangenen Eingangspakets innerhalb eines Zeitfensters (wj) fällt, während dessen die Ankunft eines Pakets geschätzt wird, dessen Verkehrspriorität (Pj) höher ist als die besagte gegebene Verkehrspriorität (Pi), ansonsten übertragen (40) des gespeicherten Eingangspakets (9) auf die Ausgangswarteschlange (EQ).

2. Verfahren nach Anspruch 1, wobei die Ankunft eines Pakets einer Verkehrspriorität (Pj) geschätzt wird, wenn besagte Ankunftswahrscheinlichkeit (PAj) höher ist als ein Schwellenwert (Tj).

3. Verfahren nach einem beliebigen der Ansprüche 1 bis 2, wobei ein separater Schwellenwert (Ti) mit jeder Verkehrspriorität (Pi) verbunden ist.

4. Verfahren nach einem beliebigen der Ansprüche 1 bis 3, wobei der Schritt des Berechnens (10) umfasst: Überwachen der Ankunftszeit der Eingangspakete (9) gemäß ihrer Verkehrspriorität (Pi) zum Bestimmen einer Verteilungsfunktion (Di) für jede Verkehrspriorität (Pi) unter Schätzen einer Ankunftswahrscheinlichkeit (PAi) gegen die Zeit (t) für künftige Pakete.

5. Verfahren nach einem beliebigen der Ansprüche 1 bis 4, wobei jede Verteilung (Di) modelliert wird, unter Annahme eines Wahrscheinlichkeitsgesetzes, durch einen Mittelwert (µi) und eine Standardabweichung (σi).

6. Verfahren nach den Ansprüchen 2 und 5, wobei die Ankunftswahrscheinlichkeft (PAi) als höher angesehen wird als der Schwellenwert (Ti), während Zeitfenstern (wi), die um mittlere Momente (tci) herum angeordnet sind, die periodisch definiert werden mit einer Periode, die dem Mittelwert (µi) entspricht, und in Bezug auf einen Startmoment (t0), der bestimmt wird durch ein Erhöhen des Überlastungsindilcators (Cl).

7. Verfahren nach Anspruch 6, wobei jedes Zeitfenster (wi) geöffnet ist von einem Startmoment (tbi) bis zu einem Endmoment (tei), wobei besagter Startmoment (tbi) definiert ist durch ein erstes Dauervielfaches der Standardabweichung (σi) vor besagtem mittleren Moment (tci), wobei besagter Endmoment (tei) definiert wird durch ein zweites Dauervielfaches der Standardabweichung (σi) nach besagtem mittleren Moment (tci).

8. Überlastungsverwaltungsvorrichtung, umfassend mehrere Eingangswarteschlangen (IQi), wobei jede Eingangswarteschlange (IQi) dediziert ist zum Speichern von Eingangspaketen gemäß einer gegebenen Verkehrspriorität (Pi), mindestens eine Ausgangswarteschlange (EQ), die ausgelegt ist zum Empfangen und Speichern von Verkehrspaketen von besagten mehreren Eingangswarteschlangen (IQi), und eine Steuereinheit (6), die ausgelegt ist zum Steuern entweder der Übertragung oder des Verwerfens der Verkehrspakete, die in den Eingangswarteschlangen (IQi) gespeichert sind, wobei ein Eingangspaket (9) einer gegebenen Verkehrspriorität (Pi) empfangen wird, und wobei besagtes Eingangspaket (9) in einer entsprechenden Eingangswarteschlange (IQi) gespeichert wird;
**dadurch gekennzeichnet, dass** besagte Steuereinheit (6) umfasst:
einen Empfänger zum Empfangen von besagten Eingangswarteschlangen (IQi) einer ersten Information, umfassend die Ankunftszeiten besagter Eingangspakete;
einen Computer zum Berechnen (10), auf Grundlage besagter ersten Information, einer Verteilungsfunktion (Di) für jede Verkehrspriorität (Pi) unter Abschätzen einer Ankunftswahrscheinlichlceit (PAi) gegen die Zeit (t) für künftige Pakete besagter Priorität, und Bestimmen, auf Grundlage jeder Verteilungsfunktion (Di), mindestens eines Zeitfensters (wi), während dessen die Ankunft eines künftigen Pakets entsprechender Verkehrspriorität (Pi) geschätzt wird;
- einen Detektor zum Erkennen (50) des Empfangs eines Überlastungsindikators (Cl) von besagter Ausgangswarteschlange (ED); wobei besagte Steuereinheit (6) weiterhin umfasst:
- einen Abscheider, der ausgelegt ist, beim Empfangen sowohl von besagtem Überlastungsindikator (Cl) als auch besagten Eingangspakets (9), zum Verwerfen (30) des gespeicherten Eingangspakets (9), wenn die Ankunftszeit des empfangenen Eingangspakets innerhalb eines Zeitfensters (wj) fällt, während dessen die Ankunft eines Pakets geschätzt wird, dessen Verkehrspriorität (Pj) höher ist als die besagte gegebene Verkehrspriorität (Pi);
- einen Sender zum sonstigen Übertragen (40) des gespeicherten Eingangspakets (9) auf die Ausgangswarteschlange (ED).

## Revendications

1. Procédé de gestion de la congestion dans une dispositif de réseau de communication (1) comprenant plusieurs files d'attente d'entrée (lQi), chaque file d'attente d'entrée (IQi) étant dédiée au stockage des paquets entrants selon une priorité de trafic donnée (Pi), au moins une file d'attente de sortie (EQ) adaptée pour recevoir et stocker les paquets de trafic en provenance desdites plusieurs files d'attente d'entrée (IQi), et une unité de commande (6) adaptée pour commander soit la transmission soit le rejet des paquets de trafic stockés dans les files d'attente d'entrée (lQi), le procédé comprenant les étapes suivantes :
- recevoir au niveau du dispositif de réseau (1) un paquet entrant (9) d'une priorité de trafic donnée (Pi),
- stocker ledit paquet entrant (9) dans une file d'attente d'entrée correspondante (lQi), **caractérisé en ce que** le procédé comprend la réalisation des étapes suivantes au niveau de ladite unité de commande (6) :
recevoir en provenance desdites files d'attente d'entrée (IQi) des premières informations contenant les temps d'arrivée desdits paquets entrants ;
calculer (10), d'après lesdites informations, une fonction de distribution (Di) pour chaque priorité de trafic (Pi) estimant une probabilité d'arrivée (PAi) en fonction du temps (t) pour les paquets à venir de ladite priorité, et déterminer, d'après chaque fonction de distribution (Di), au moins une fenêtre temporelle (wi) durant laquelle il est prévu qu'un paquet à venir de la priorité de trafic correspondante (Pi) arrive ;
- détecter (50) la réception d'un indicateur de congestion (Cl) en provenance de ladite file d'attente de sortie (EQ) ;
- à la réception à la fois dudit indicateur de congestion (Cl) et dudit paquet entrant (9), rejeter (30) le paquet entrant stocké (9) si le temps d'arrivée du paquet entrant reçu se situe dans une fenêtre temporelle (wj) durant laquelle il est prévu qu'un paquet de priorité de trafic (Pj) supérieure à ladite priorité de trafic donnée (Pi) arrive, sinon, transmettre (40) le paquet entrant stocké (9) à la file d'attente de sortie (EQ).

2. Procédé selon la revendication 1, dans lequel il est prévu qu'un paquet de priorité de trafic (Pj) arrive lorsque ladite probabilité d'arrivée (PAj) associée à ladite priorité de trafic (Pj) est supérieure à un seuil (Tj).

3. Procédé selon l'une quelconque des revendications 1 à 2, dans lequel un seuil distinct (Ti) est associé à chaque priorité de trafic (Pi).

4. Procédé selon l'une quelconque des revendications 1 à 3, dans lequel l'étape de calcul (10) comprend l'étape suivante : surveiller le temps d'arrivée des paquets entrants (9) selon leur priorité de trafic (Pi) afin de déterminer une fonction de distribution (Di) pour chaque priorité de trafic (Pi) estimant une probabilité d'arrivée (PAi) en fonction du temps (t) pour les paquets à venir.

5. Procédé selon l'une quelconque des revendications 1 à 4, dans lequel chaque distribution (Di) est modélisée, en faisant l'hypothèse d'une loi probabiliste, par un écart moyen (µi) et un écart standard (σi).

6. Procédé selon les revendications 2 et 5, dans lequel la probabilité d'arrivée (PAi) est considérée comme étant supérieure au seuil (Ti), durant les fenêtres temporelles (wi) disposées autour d'instants centraux (tci) définis périodiquement avec une période égale à la moyenne (µi) et par rapport à un instant d'origine (10) déterminé par une augmentation de l'indicateur de congestion (Cl).

7. Procédé selon la revendication 6, dans lequel chaque fenêtre temporelle (wi) est ouverte entre un instant de début (tbi) et un instant de fin (tei), ledit instant de début (tbi) étant défini par une première durée multiple de l'écart standard (σi) avant ledit instant central (tci), ledit instant de fin (tei) étant défini par une deuxième durée multiple de l'écart standard (σi) après ledit instant central (tci).

8. Dispositif de gestion de congestion comprenant plusieurs files d'attente d'entrée (IQi), chaque file d'attente d'entrée (lOi) étant dédiée au stockage des paquets entrants selon une priorité de trafic donnée (Pi), au moins une file d'attente de sortie (EQ) adaptée pour recevoir et stocker les paquets de trafic en provenance desdites plusieurs files d'attente d'entrée (IQi), et une unité de commande (6) adaptée pour commander soit la transmission soit le rejet des paquets de trafic stockés dans les files d'attente d'entrée (IQi),
dans lequel un paquet entrant (9) d'une priorité de trafic donnée (Pi) est reçu, et
dans lequel ledit paquet entrant (9) est stocké dans une file d'attente d'entrée correspondante (IQi) ;
**caractérisé en ce que** ladite unité de commande (6) comprend :
un récepteur destiné à recevoir en provenance desdites files d'attente d'entrée (IQi) des premières informations contenant les temps d'arrivée desdits paquets entrants ;
un ordinateur pour calculer (10), d'après lesdites premières informations, une fonction de distribution (Di) pour chaque priorité de trafic (Pi) estimant une probabilité d'arrivée (PAi) en fonction du temps (t) pour les paquets à venir de ladite priorité, et déterminer, d'après chaque fonction de distribution (Di), au moins une fenêtre temporelle (wi) durant laquelle il est prévu qu'un paquet à venir de la priorité de trafic correspondante (Pi) arrive ;
un détecteur destiné à détecter (50) la réception d'un indicateur de congestion (Cl) en provenance de ladite file d'attente de sortie (EQ) ;
ladite unité de commande (6) comprenant en outre:
- un dispositif de rejet adapté pour, à la réception à la fois dudit indicateur de congestion (Cl) et dudit paquet entrant (9), rejeter (30) le paquet entrant stocké (9) si le temps d'arrivée du paquet entrant reçu se situe dans une fenêtre temporelle (wj) durant laquelle il est prévu qu'un paquet de priorité de trafic (Pj) supérieure à ladite priorité de trafic données (Pi) arrive ;
- un émetteur pour transmettre (40) sinon le paquet entrant stocké (9) à la file d'attente de sortie (EQ).
